# EUROPEAN PATENT SPECIFICATION

(11) **EP 3 761 132 B1**
(45) Date of publication and mention of the grant of the patent: **12.10.2022**
(21) Application number: 20183220.1
(22) Date of filing: 30.06.2020
(51) Int. Cl.: G05B 19/418

(54) **A METHOD FOR IMPROVING THE EFFICIENCY OF AN AUTOMATIC PACKAGING MACHINE**
VERFAHREN ZUR VERBESSERUNG DER EFFIZIENZ EINER AUTOMATISCHEN VERPACKUNGSMASCHINE
MÉTHODE POUR AMÉLIORER L'EFFICACITÉ D'UNE MACHINE D'EMBALLAGE AUTOMATIQUE

(30) Priority: 01.07.2019 IT 201900010251; 01.07.2019 IT 201900010263
(43) Date of publication of application: 06.01.2021
(73) Proprietor: G.D S.p.A., 40133 Bologna (IT)
(72) Inventor: MENGOLI, Fausto, 40133 BOLOGNA (IT); STIVANI, Eros, 40133 BOLOGNA (IT); FEDERICI, Luca, deceased (IT)
(74) Representative: Bianciardi, Ezio

(56) References cited:
- EP-A1- 2 199 883
- EP-B1- 2 199 883
- CN-A- 104 699 050
- US-A1- 2007 144 542
- US-A1- 2013 096 711
- US-A1- 2017 318 857

## Description

This invention addresses the technical field of industrial production processes.

More specifically, this invention relates to a method for improving the efficiency of an automatic packaging machine of consumer products, such as, for example, a machine of the tobacco industry - that is to say, designed to process raw materials, semi-finished or finished products of the tobacco industry.

The rising demand for high production volumes has led to the need to develop processing machines capable of working at very high speeds so as to be able to make very large quantities of products in a short space of time. Consequently, increasing importance is attached to the need to ensure precision and correct performance of processes in order to minimise the number of defective, hence non-marketable products which must be rejected during, or after, the production process.

In this context, document EP2199883 discloses a machine for producing filter cigarettes from filter segments and cigarette segments which comprises a train of rollers wherein, during the course of the passage of the cigarettes around one or more of the final rollers in the train, the filter cigarettes are inspected by a quality control unit in order to detect and identify possible defects (tears, holes, stains, distortions, deviations from correct colour and from prescribed geometrical dimensions, etc.), and determine the rejection of any cigarettes considered to be substandard and therefore not acceptable.

In effect, besides being a cost in terms of raw materials wasted and needing to be disposed of, rejection of a defective product also involves lengthy machine downtimes, making this problem extremely onerous in terms of effective productivity of a production plant.

The Applicant has found that in addition to the correct and efficient operation of the automatic packaging machine of consumer products, it is essential to be able to ensure that the materials processed are of high quality.

In effect, if the materials fed to the automatic packaging machine of consumer products are of poor, unsatisfactory quality, the products made will, substantially inevitably, be non-conformant and will have to be rejected, thus inevitably reducing the efficiency of the production process of the machine.

In this context, the technical purpose which forms the basis of this invention is to propose a method for improving the efficiency of an automatic packaging machine of consumer products, specifically an automatic packaging machine of consumer products of the tobacco industry, to overcome the above mentioned drawbacks of the prior art.

More specifically, this invention has for an aim to provide a method for improving the efficiency of an automatic packaging machine of consumer products and capable of guaranteeing a rise in production efficiency compared to existing solutions, in particular by significantly reducing the incidence of defective products.

Another aim of the invention is to reduce - ideally, to eliminate - the need to interrupt production processes to deal with the presence of defective materials in the processing machines.

The technical purpose indicated and the aim specified are substantially achieved by a method for improving the efficiency of an automatic packaging machine of consumer products, comprising the technical features set out in one or more of the appended claims.

The invention is set out in the appended set of claims.

This invention discloses a method which is intended to improve the efficiency of an automatic packaging machine of consumer products, specifically of the tobacco industry, and which is executed by providing at least one material, specifically a raw material, a semi-finished or a finished product, at a feed station of an automatic packaging machine of consumer products and comprising at least one work unit configured to operate on the material.

The method also comprises detecting, with detection means, at least one parameter representative of the quality of at least one portion of the material, while the material is at the feed station and, if the at least one representative parameter does not conform to a predefined model based on at least one reference parameter, removing at least one non-conformant part of the material so that it does not reach the work unit. In the method, the detection step is carried out while the material is arranged in a loading area located immediately in front of the feed station, where the loading area forms part of a work island containing the automatic packaging machine, or is performed downstream of the loading of the material in the feed station and upstream of a processing actuated by said at least one work unit, namely at an instant in which the material, or at least a relative portion, which is an object of the detecting, has not yet been subjected to any processing.

Advantageously, the method of this invention allows keeping a close and accurate check on the state and quality of the materials fed to a particular automatic packaging machine of consumer products in order to assess whether processing this material is advisable or not, so that the overall efficiency of the machine can be improved.

The dependent claims correspond to different embodiments of the invention.

In a different embodiment of it, the proposed method for improving the efficiency of a processing machine, in particular of the tobacco industry, comprises the steps of:
- preparing at least one material (M), in particular a raw material, a semi-finished or a finished article, at a feed station (2) of a processing machine (1) comprising at least one work unit (3) configured to operate on said material (M);
- detecting, by means of detection means (4), at least one parameter representing at least one property of at least one portion of the material (M) whilst the material (M) is at the feed station (2);
- if said at least one parameter detected does not conform to a predetermined model based on at least one reference parameter, intervening on the at least one work unit (3) of the machine (1) to modify at least one operating parameter of the work unit (3) so as to compensate for the non-conformance of the material (M).

Preferably, the method comprises the following steps:
- detecting the presence of any non-conforming products feeding out of the work unit (3);
- determining a cause of non-conformance of said non-conforming products;
- modifying the at least one reference parameter as a function of said cause of non-conformance.

Preferably, the method is operated by means of an artificial intelligence algorithm configured for automatic learning, preferably by means of an artificial neural network which can be trained to recognise the non-conformance of the material (M) by storing and analysing the representative parameters detected.

Preferably, the method also comprises the following steps:
- comparing the at least one representative parameter with a predetermined model generating a respective percentage comparison value representing the degree of conformance of the at least one portion of material (M) to be processed;
- modifying at least one operating parameter of said work unit (3) if said percentage comparison value is within a predetermined range and rejecting the material (M) if the percentage comparison value is outside said predetermined range.

The step of intervening on the at least one work unit (3) of the machine (1) is performed preferably by modifying at least one between: a processing speed of the work unit (3), a feeding speed of the material (M) to the work unit (3), a temperature of the work unit (3), a humidity of the work unit (3).

Preferably, the method comprises a step of graphically displaying said at least one representative parameter by means of a graphical interface. Preferably, the method also comprises a step of storing, preferably in a remote storage unit such as a computing cloud, said at least one representative parameter to allow a subsequent analysis.

Preferably, the method comprises the steps of generating an alert signal and sending said alert signal to a remote terminal if at least one representative parameter of the material (M) does not conform to a predetermined model, said remote terminal preferably comprising at least one between: a computer, a tablet, a smartphone.

Preferably, the at least one material (M) comprises a plurality of elements and wherein the detecting step is performed on a portion of each element. Preferably, said elements are identical to each other and positioned according to a configuration of mutual juxtaposition or superposition and preferably said detection is performed on an externally visible perimeter portion of said elements in the configuration of mutual juxtaposition or superposition.

Preferably, the detecting step is performed by moving the detection means (4) around the material (M), in such a way as to acquire at least one parameter representing the entire free surface of the material (M). Preferably, the detecting step is performed by detecting at least one of the following parameters: moisture content of the material (M), thickness of the material (M), presence of holes and/or openings, temperature of the material (M), presence of electrostatic charges, presence of fold lines, cuts, other surface and/or internal defects, colour of the material, presence of environmental marks or conditions.

Preferably, the processing machine (1) is a machine included in the following group: machine for making filters; machine for making cigarette segments; filter tip attachment machine; packaging machine - cellophane wrapping machine, cartoning machine - automatic machine in general. Preferably, the method also comprises a step of interconnecting a plurality of processing machines (1) defining an artificial neural network comprising at least one processing unit configured to receive and store a plurality of parameters detected by respective detection means (4) of the plurality of processing machines (1), where the processing units are also configured to modify the at least one reference parameter of the processing machines (1) of the artificial neural network as a function of an analysis of the plurality of parameters.

Further features of the invention and its advantages are more apparent in the following indicative, hence non-limiting, description of a preferred but non-exclusive embodiment of a method for improving the efficiency of an automatic packaging machine of consumer products, as illustrated in the accompanying drawings, in which:
- Figure 1 shows a specific operating configuration of the method according to this invention;
- Figure 2 shows a detail of a part during the performance of a detecting step;
- Figure 3 schematically represents a possible configuration of applying the method in a production plant.

This invention has for an object a method for improving the efficiency of an automatic packaging machine of consumer products, specifically an automatic packaging machine 1 of consumer products of the tobacco industry.

The expression "automatic packaging machine 1" is used generally to mean any machine capable of performing an industrial production process which contributes to the transformation of raw material into finished products and/or which is intended for their transportation, storage or packing.

More specifically, the automatic packaging machine 1 may be a machine for making filters: that is to say, a machine designed specifically to process filter materials M used for making filter segments of the tobacco industry. A machine of this kind receives and processes a continuous stream of filter material (or "tow") from compressed bales, flavourings (usually liquid), plasticising materials, paper in continuous web form fed from a roll, glues and other raw materials.

The automatic packaging machine 1 may also be a machine for making cigarette segments: that is to say, a machine designed specifically to process tobacco in various forms to make segments of smoking articles. A machine of this kind receives and processes tobacco fibres, flavourings (usually liquid), glues and other raw materials.

The automatic packaging machine 1 may also be a filter tip attachment machine: that is to say, a machine designed specifically to process filter segments and segments of smoking articles in such a way as to assemble and attach them to each other to make a succession of finished products of the tobacco industry. A machine of this kind receives and processes cigarette and filter segments, paper in continuous web form fed from a roll, glues and other raw materials.

The automatic packaging machine 1 may also be a packing machine: that is to say, a machine designed specifically to package products of the tobacco industry. Packaging may involve both making one or more packets containing the smoking articles - for example, by making and or forming blanks - and making groups of products ready for transportation and/or storage - for example by grouping together and packing pluralities of packets. A machine of this kind receives and processes finished cigarettes, paper in continuous web form fed from a roll, a web of aluminium foil fed from a roll, individual blanks for making outer packets, coupons or stamps, a web of heat-shrink polyethylene film from a roll, glues and other raw materials.

For example, the packing machine may be a cellophane wrapping machine, a cartoning machine or an automatic machine in general.

Generally speaking, the automatic packaging machine 1 is any machine designed to process or treat materials M and configured to make and or pack articles of the tobacco industry and comprises a feed station 2 and at least one work unit 3.

The expression "feed station 2" is used to mean any station through which a material M to be processed, specifically in continuous or discrete form, enters a processing line and which defines an initial, terminal or intermediate zone of the automatic packaging machine 1.

The method comprises preparing at least one material M at a feed station 2 of an automatic packaging machine 1 comprising at least one work unit 3 configured to operate on the material M.

Generally speaking, the expression "at" is used to mean that the material M is either being fed into the feed station 2 or is already mounted in the feed station.

Generally speaking, the term "materials M" refers to raw materials, semi-finished items or finished products, in particular of the tobacco industry, which can be fed to an automatic packaging machine 1 to be processed, worked or even just grouped together/packaged in boxes to facilitate transportation and storage.

By way of non-limiting example, the materials M subjected to processing may comprise:
- rolls of material M in web form - for example of paperboard, heat-shrink polyethylene, paper and/or aluminium foil, tear-resistant plastic material (to make tear tapes or tear strips) and other materials;
- one or more groups ("bundles") of blanks suitable, for example, to be suitably folded to form an outer or inner packet for smoking articles, or a collar for a hinge-lid packets, or a tray-like reinforcing element to support a group of cigarettes in the respective inner packet, and other materials;
- one or more groups of segments, such as filter or cigarette segments, or generically any tubular elements of the tobacco industry, whether full or empty;
- a bale of tow;
- one or more containers of loose material M in powder, granular or filament form;
- containers of liquid or viscous substances (liquid flavourings, plasticisers
- triacetin -, glues and others).

The method of this invention is also suitable for improving the efficiency of machines for industries other than the tobacco industry - for example, machines used in the production of sanitary articles, in the production of food products (confectionery) or, more generally speaking, in the context of any production or processing machines - making it possible to work with different materials, depending on the specific technical sector concerned, in particular for making up the products in the case of the sanitary products or for their preparation in the case of the food products (confectionery).

In an embodiment, once the material M is at the corresponding feed station 2, detection means 4 proceed to detect at least one parameter representing the quality of at least one portion of the material M.

In other words, the method entails obtaining information relating to the material M when the material has already been transported at least in the vicinity of the feed station 2: that is to say, just before it starts being processed.

In detail, the at least one representative parameter identifies at least one property of the material M used to derive information regarding the overall quality of the material M.

In other words, the aesthetic and/or structural/functional conditions of the material M can be identified when the material is ready to be processed (and thus needs no further preparation or handling by conveying means) but in any case before processing on it actually starts, thus ensuring that any defects are promptly and systematically identified and that the material M is subjected to processing only if it is effectively suitable for making products of acceptable quality.

In particular, detection of the at least one representative parameter is performed by optical and/or electromagnetic and/or ultrasound means.

In other words, the at least one representative parameter is obtained by inspecting the material M using devices configured to carry out inspections of an optical nature (for example, video cameras or picture cameras), inspections of an electromagnetic nature (for example, microwave or infrared sensors) or inspections of a mechanical nature (for example ultrasound sensors or contact sensors).

By way of non-limiting example, the parameters that may be the object of detection and that are significant for determining whether the material M is effectively suitable for processing may comprise at least one of the following: density or weight of the material, moisture content of the material M, thickness of the material M, presence of holes and/or openings at least on the surface (or even internal if penetrating radiation is used), temperature of the material M) presence of electrostatic charges, presence of unwanted fold lines, scratches and other surface and/or internal defects, colour of the material, presence of stains or environmental conditions.

The expression "environmental conditions" refers to all those parameters that are influenced by the environment in which the machine 1 is located and which may be due, for example, to its geographical position.

The detecting step thus allows obtaining information on the chemical and physical properties of the material M, which provide useful indicators for assessing the effective conditions of the material M.

More specifically, the information obtained allows assessing whether or not the material M as a whole, or even individual portions of it, is suitable for processing to contribute to the production of a product of acceptable quality, suitable for sale.

According to an aspect of this invention, the detecting step is carried out whilst the material M is located in a work island 5 containing the automatic packaging machine 1, preferably in a loading area immediately in front of the feed station 2.

By the term "work island 5" is meant an area configured to perform one or more processes on the material M, contributing to the production of an end product: thus, for example, it may be an area containing different processing machines, facing one or more areas through which the products and/or materials move.

The expression "immediately in front of" is used to mean that the loading area is located within a distance from the feed station 2 - preferably less than 5 metres - that is short enough to ensure that the material M will not undergo any further changes/unwanted deterioration during its subsequent or concurrent transfer from the loading area to the feed station 2.

In other words, the distance is such as to ensure that the parameters representative of the quality of the material M do not undergo significant changes between the position where they are detected and the position downstream of the loading area where processing occurs.

Alternatively, the detecting step may be performed downstream of the loading of the material M in the feed station 2 and upstream of a processing performed by the at least one work unit 3, preferably at an instant in which the material (M), or at least a portion of it, which is the object of the detecting, has not yet been subjected to any processing.

In other words, the method described here involves inspecting the quality level of the material M and its suitability for processing at a stage immediately before processing so that the material M can be intercepted and removed, replaced or "corrected" without having to interrupt machine operation.

By way of added caution, inspection may be performed both upstream of the position where the material M is transferred to the feed station and downstream of the feed station.

The material M may comprise a plurality of elements: in this context, the detecting step preferably involves inspecting a portion of each element. The elements making up the material M may be identical and positioned according to a configuration of mutual juxtaposition or superposition: in this context, detection is preferably carried out on an externally visible perimeter portion of the elements in the configuration of mutual juxtaposition or superposition.

In other words, the material M may be composed of a plurality of identical elements, such as a plurality of blanks or segments of the tobacco industry which are grouped together to form distinct stacks ("bundles") of juxtaposed and/or superposed elements.

In this context, the detecting step is carried out by inspecting an externally visible perimeter portion of the elements, assessing their conformance as a function of the representative parameters obtainable from the peripheral portion.

In particular, the detecting step is performed by moving the detection means 4 around the material M, in such a way as to acquire at least one parameter representing the entire free surface of the material M.

In the case where the at least one representative parameter does not conform with a predetermined standard, the method comprises removing at least one non-conforming part of the material M so that the non-conforming part does not reach the work unit 3.

In other words, the information obtained through the collection of representative parameters inspected during the detecting step is used to determine whether or not the material M is suitable for processing and if this procedure indicates that at least one portion of the material M is such that processing it would result, substantially inevitably, in the production of a semi-finished or finished product of unacceptable quality and to be rejected, it is removed from the production process.

In particular, the procedure for assessing the conformance of the material M is carried out by comparing the representative parameters with a suitable predefined model based on at least one reference parameter.

It should be noted that the reference parameter may be a value known a priori or a value entered by a user and/or determined as a function of specific properties of the material M the method of this invention is applied on. The reference parameter may also be a value or information item derived from the combination of two or more properties identifiable in the material and assessed as a whole.

In this context, considering the parameters as a whole, it is possible, for example, to identify two or more defects which, if considered individually, would characterise the material M as suitable for processing but which, when considered together as a whole, characterise the material as defective and unsuitable for processing.

It is also possible to determine and subsequently identify specific sets of parameters whose values in certain contexts would be acceptable if taken individually but whose combination represents the presence of at least some defective portions of the material M.

The method of this invention also comprises detecting the presence of non-conforming products feeding out of the work unit 3 and, in particular, determining the cause of the non-conformance.

In other words, the method also involves analysing the conditions of the material M already processed and feeding out of the work station 3, to detect any non-conformance and identify its causes.

The information collected regarding the conditions of the material M feeding out of the work station 3 is then used to modify the at least one reference parameter as a function of the cause of the non-conformance identified and associated with the material M processed, thus progressively improving and increasingly precisely optimising the predefined model used as reference. In other words, the method of this invention defines an artificial intelligence algorithm configured for automatic learning, preferably by means of an artificial neural network which can be trained to recognise the non-conformance of the material M by storing and analysing the representative parameters detected directly on the material M both before and after it is processed by the work unit 3.

In particular, the artificial intelligence algorithm and/or an artificial neural network are trained to recognise the defects of the material M which, individually or in combination, can compromise the continuity of operation and overall efficiency of the automatic packaging machine 1.

Preferably, training the neural network and recognising the defects of the material M are performed by big data analysis.

The artificial intelligence algorithm is thus able to modify the predictive model used to assess the conformance of the material M for the purposes of processing, as a function of the information obtained with the detection means related to the material M itself and to the result obtained by processing the material M.

The method described herein further comprises interconnecting two or more processing machines 1 in such a way as to define an artificial neural network which comprises at least one processing unit configured to receive and store the plurality of parameters detected by a respective plurality of detection means 4 belonging to different processing machines 1, preferably located at different places and/or factories.

This configuration optimises the collection of information and the creation of big data repositories which can be analysed to allow optimising the learning process of the algorithm and improving its predictive capability.

The processing unit is thus configured to operate on the predefined models of the individual processing machines 1 to vary the at least one reference parameter as a function of an analysis of the plurality of parameters detected.

In other words, the processing unit is configured to receive a large volume and variety of data and to analyse them by extrapolating existing links between parameters of a different nature and temporal variations of the same parameter, so as to improve the entire process of assessing whether or not the material M is suitable for processing.

In particular, the method comprises detecting a plurality of parameters and at least some of them are processed and used to assess the conformance of the material M using the processing unit to deploy the experience and information accumulated by different processing machines 1.

The processing machines 1 thus define the nodes of a neural network which shares the information so as to improve the collection of data which can be processed locally or centrally (by the processing unit) in order to optimise the network's learning process, allowing the predefined model to be progressively fine-tuned by taking into optimal account the statistical variations of the single parameters and their correlations.

If a material M or a portion of it is assessed to be unsuitable, the removing step is performed in such a way as not to require stopping the automatic packaging machine 1 and/or in such a way that the non-conforming material M does not produce rejects in the production of the automatic packaging machine 1.

The step of removing the non-conforming material occurs upstream of the work unit 3 so it is not processed and time and resources are not wasted on a process that will lead to the production of a product that will inevitably be rejected or to a machine shutdown needed to remove the material M or the defective product.

According to one particular embodiment, the automatic packaging machine 1 comprises an accumulation buffer and the removing step is performed prior to the transfer of the material M to the accumulation buffer, so that the accumulation buffer can compensate for a stopping in the feeding of material M, as a result of the material M being removed.

In other words, the automatic packaging machine 1 is provided with an accumulation buffer used for storing part of the material M before it is processed but after it has been inspected by the detection means 4.

That way, if a portion of the material M is found to be non-conforming, it would be possible for an operator, or for suitable automatic removing means, to replace the non-conforming material M without having to interrupt the processing operations being performed by the automatic packaging machine 1 because, during the replacement/removing procedure, the work unit 3 can be fed with the material M which has already been inspected and found suitable for processing and which is stored in the accumulation buffer. In a first possible embodiment, the step of removing at least one non-conforming part of the material M is performed by removing only the non-conforming part.

For example, if the material M is a roll of web material, detection of its representative parameters may identify the presence of a stretch of web with defects in it such as holes or tears.

In this context, it is possible to remove the non-conforming portion without having to eliminate the entire roll since the rest of the web on the roll may be perfectly suitable for processing. If the roll has already been loaded, the aid of the accumulation buffer allows inspecting the surface of the web just after the point of unwinding and to remove the defective part by stopping feed to the accumulation buffer and removing the defective part of the web (or the whole roll) while the part of the web in the accumulation buffer provides the material needed to allow the machine to continue running.

In a different embodiment, the step of removing at least one non-conforming part of the material M is performed by removing all of the material M.

For example, if the detection means 4 are configured to analyse not only the surface of the material M but its full volume, it is possible that the non-conforming part will be most of the material M or a relatively large part of it, so that removing only the non-conforming part would inevitably damage substantially also those portions which, in principle, are of acceptable quality, meaning that it may be more efficient to remove and replace all of the material.

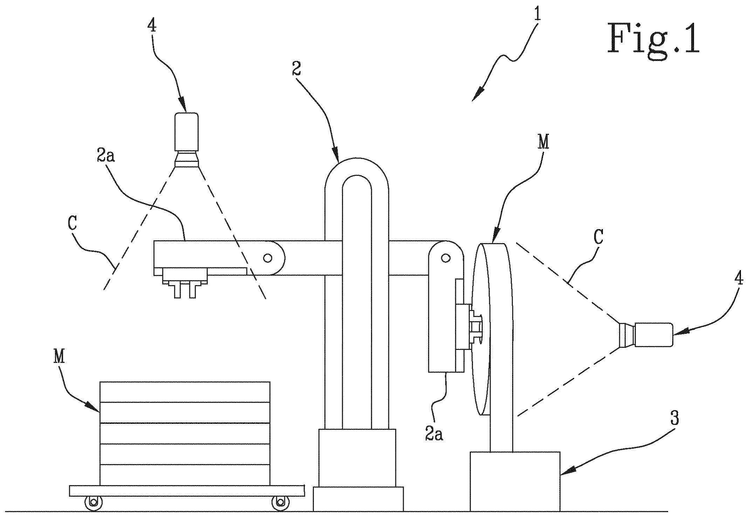

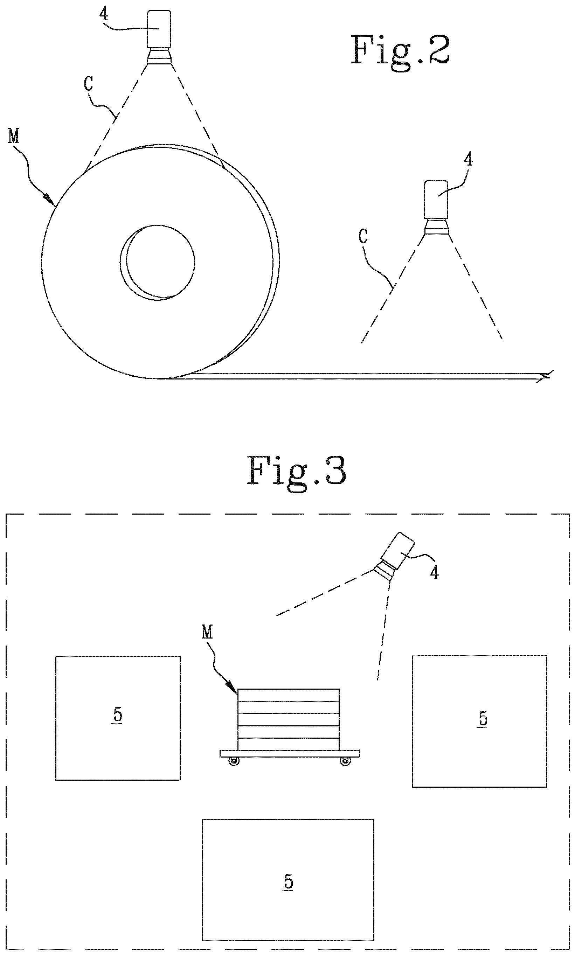

With reference to the accompanying drawings, a possible application of the method of this invention is shown in particular in Figures 1 and 2.

Figure 1 in particular shows an automatic packaging machine 1 designed to process rolls of continuous web.

This automatic packaging machine 1 comprises a feed station provided with two coupling devices 2a configured to retain and move respective rolls of continuous web.

Specifically, the rolls are disposed in the vicinity of the feed station 2, moving them, for example, with a suitable carriage, from which they are then transferred automatically or manually to couple them to the respective coupling device 2a.

As may be observed in Figure 1, the step of detecting the representative parameters of the material M - the roll of web in the specific case illustrated - may be performed both upstream of the position where the material M is transferred to the feed station 2 and downstream of the feed station, through suitable detection means 4, illustrated in Figures 1 and 2, in the form of cameras disposed in such a way that their field of view C is centred on the material M.

As already mentioned, it is also possible for the detection means 4 to be movable and to orbit around the material M so as to allow inspecting its entire surface and/or to facilitate inspecting its full volume.

This detecting step is in any case performed upstream of the work unit 3 so that the integrity and quality level of the material M can be assessed before it is processed in order to promptly identify any non-conformance making it necessary to remove all or part of the material.

As may be observed in particular in Figure 2, the detecting step may be performed either on the roll prior to unwinding (generally speaking, on all of the material M as a whole) or on a portion of the web while it is being unwound (generally speaking, on a succession of individual portions of the material M).

The method of this invention also comprises a step of graphically displaying the at least one representative parameter by means of a graphical interface. That way, an operator can be provided with a clear indication of the properties detected and their values, so that even the operator is aware of the need to perform a step of at least partly removing the material M from the production process.

The method also comprises a step of storing the at least one representative parameter for subsequent analysis.

It is thus possible to collect information over time to allow optimising decision-making algorithms and the ideal model which can be used to assess the suitability of the material M to be fed to the work unit 3.

In one particular embodiment, the storing step is carried out by storing the at least one parameter in a remote storage unit, the remote storage unit preferably comprising a computing cloud.

Generally speaking, storage may be carried out by a physical storage unit installed at or on the automatic packaging machine 1 or by a virtual storage unit, such as a computing cloud is, configured to save and store the representative parameters so they can be analysed at a later stage.

It should be noted that if the processing unit comprises a computing cloud, even the processes used to analyse the representative parameters to determine whether or not the material M is suitable for processing may be performed remotely through the computing cloud.

Further, according to a particular aspect of this invention, the method comprises generating an alert signal and sending it to a remote terminal if at least one representative parameter of the material M does not conform with a predetermined model.

That way, it is possible to generate a signal identifying the presence, at the feed station 2, of a material unsuitable for processing and to send that signal to a remote terminal such as, for example, a computer, a tablet, a smartphone or other electronic device, whether portable or not, whereby a user can be informed that an anomalous situation has arisen. Advantageously, the alert signal may also comprise information relating to the representative parameters detected and their specific conformance to the predefined standard.

This aspect allows promptly providing the user with the information necessary to decide directly whether or not human intervention is required. Advantageously, this invention achieves the proposed aims and overcomes the above mentioned drawbacks of the prior art by providing the user with a method for improving the efficiency of an automatic packaging machine for consumer products which ensures that the machine process is performed only if the material M is found to be suitable for making products of acceptable quality, hence avoiding the need for onerous processing operations on portions of material that will inevitably lead to the production of non-marketable products that will have to be rejected.

Advantageously, this invention may also be applied outside the tobacco industry: for example, for the management of materials for automatic machines in general, such as packing machines for confectionery, food products, absorbent articles and the like. Automatic machines of this kind receive and process products to be wrapped, wrapping materials in roll or discrete form or in stacks or in composite rows, containers for liquid or pourable products and the like.

Still more advantageously, this invention is applicable in the tobacco industry because the production of the automatic machines used in this industry is very strongly conditioned by the quality of the material used; use of less than good quality materials significantly reduces the productivity of these machines.

Described below is a different embodiment of a method for improving the efficiency of a processing machine, in particular a processing machine 1 of the tobacco industry.

In accordance with this method, starting from the same principles as those of the method described in the foregoing, once the material M is at the corresponding feed station 2, detection means 4, in this case, too, proceed to detect at least one parameter representing at least one property of at least one portion of the material M.

In other words, the method entails obtaining information relating to the material M when the material has already been transported at least in the vicinity of the feed station 2: that is to say, just before it starts being processed.

That way, the aesthetic and/or structural/functional conditions of the material M can be identified when the material is ready to be processed (and thus needs no further preparation or handling by conveying means) but in any case before processing on it actually starts, thus ensuring that the conditions of the material M can be assessed and taken into account during the machine process.

In particular, detection of the at least one representative parameter is performed by optical and/or electromagnetic and/or ultrasound means.

In other words, the at least one representative parameter is detected by inspecting the material M using devices configured to carry out inspections of an optical nature (for example, video cameras or picture cameras), inspections of an electromagnetic nature (for example, microwave or infrared sensors) or inspections of a mechanical nature (for example ultrasound sensors or contact sensors).

By way of non-limiting example, the parameters that may be the object of detection and that are significant for determining whether the material M is effectively suitable for processing may comprise at least one of the following: density or weight of the material, moisture content of the material M, thickness of the material M, presence of holes and/or openings at least on the surface (or even internal if penetrating radiation is used), temperature of the material M) presence of electrostatic charges, presence of unwanted fold lines, scratches and other surface and/or internal defects, colour of the material, presence of stains or environmental conditions.

The expression "environmental conditions" refers to all those parameters that are influenced by the environment in which the machine 1 is located and which may be due, for example, to its geographical position.

The detecting step thus allows obtaining information on the chemical and physical properties of the material M, which provide useful indicators for assessing the effective conditions of the material M.

In particular, the information obtained can provide a precise and accurate picture of the conditions of the material M as a whole or even just portions of it.

In an embodiment, the detecting step is performed whilst the material M is located in a work island 5 containing the processing machine 1 to which the material will be fed, preferably in a loading area immediately in front of the feed station 2.

By the term "work island 5" is meant an area configured to perform one or more processes on the material M, contributing to the production of an end product: thus, for example, it may be an area containing different processing machines, facing one or more areas through which the products and/or materials move.

The expression "immediately in front of" is used to mean that the loading area is located within a distance from the feed station 2 - preferably less than 5 metres - that is short enough to ensure that the material M will not undergo any further changes/unwanted deterioration during its subsequent or concurrent transfer from the loading area to the feed station 2.

In other words, the distance is such as to ensure that the parameters representative of the quality of the material M do not undergo significant changes between the position where they are detected and the position downstream of the loading area where processing occurs.

Alternatively, the detecting step may be performed downstream of the loading of the material M in the feed station 2 and upstream of a processing performed by the at least one work unit 3, preferably at an instant in which the material (M), or at least a portion of it, which is the object of the detecting, has not yet been subjected to any processing.

In other words, the method described here involves inspecting the material at a stage immediately before it is processed so that its specific properties can be taken into account to optimise the machine process.

By way of added caution, inspection may be performed both upstream of the position where the material M is transferred to the feed station and downstream of the feed station.

The material M may comprise a plurality of elements: in this context, the detecting step preferably involves inspecting a portion of each element. The elements making up the material M may be identical and positioned according to a configuration of mutual juxtaposition or superposition: in this context, detection is preferably carried out on an externally visible perimeter portion of the elements in the configuration of mutual juxtaposition or superposition.

In other words, the material M may be composed of a plurality of identical elements, such as a plurality of blanks or segments of the tobacco industry which are grouped together to form distinct stacks ("bundles") of juxtaposed and/or superposed elements.

In this context, the detecting step is carried out by inspecting an externally visible perimeter portion of the elements, assessing their conformance as a function of the representative parameters obtainable from the peripheral portion.

In particular, the detecting step is performed by moving the detection means 4 around the material M, in such a way as to acquire at least one parameter representing the entire free surface of the material M.

In this embodiment of the method, if the at least one parameter detected does not conform to a predetermined model or predetermined standard, the method involves intervening on the at least one work unit 3 of the machine 1 to modify at least one operating parameter of the work unit 3 so as to compensate for the non-conformance of the material M.

In other words, the information obtained through the representative parameters collected during the detecting step is used to decide whether or not it is necessary to vary the operating parameters of the work unit 3 in order to adapt it to process the material M as a function of its specific properties.

By way of non-limiting example, the step of intervening on the at least one work unit 3 of the machine 1 is performed by modifying at least one between: a processing speed of the work unit 3, a feeding speed of the material "M" to the work unit 3, a temperature of the work unit 3, a humidity of the work unit 3.

For example, if the detecting step during the processing of a roll of continuous web gives as its result that the roll has some imperfections in it that make it particularly fragile but that it is nevertheless suitable for processing, the speed of feeding and processing the roll can be reduced to reduce the mechanical stress the roll is subjected to so as to ensure that it is not damaged or torn during the entire production process.

In other example embodiments, if the detecting step during the processing of a heat-shrink plastic film gives as its result that the plastic is particularly thin, the process temperature of the work unit can be reduced so as to prevent creating an excessively high thermal stress that would cause it to shrink too quickly and thus get damaged.

Thus, by adapting the production process to the requirements of the material M, it is possible to reduce the incidence of defects or non-conformance in the products processed.

In particular, the procedure for assessing the conformance of the material M is carried out by comparing the representative parameters with a suitable predetermined model defined by at least one reference parameter.

It should be noted that the reference parameter may be a value known a priori or a value entered by a user and/or determined as a function of specific properties of the material M the method of this invention is applied on. The reference parameter may also be a value or information item derived from the combination of two or more properties identifiable in the material and assessed as a whole.

In this context, considering the parameters as a whole, it is possible, for example, to identify two or more properties which, if considered individually, would not require special attention or variations in the production process but which, when considered together as a whole, require making adaptations in order to prevent the operational specifications of the work unit 3 from spoiling the material M and resulting in the production of a defective product.

The method also comprises detecting the presence of non-conforming products feeding out of the work unit 3 and, in particular, identifying the cause of the non-conformance.

In other words, the method also involves analysing the conditions of the material M already processed and feeding out of the work station 3, to detect any non-conformance and identify its causes.

The information collected regarding the conditions of the material M feeding out of the work station 3 is then used to modify the at least one reference parameter as a function of the cause of the non-conformance identified and associated with the material M processed, thus progressively improving and increasingly precisely optimising the reference model.

In other words, the method defines an artificial intelligence algorithm configured for automatic learning, preferably by means of an artificial neural network which can be trained to recognise the non-conformance of the material M by storing and analysing the representative parameters detected directly on the material M both before and after it is processed by the work unit 3.

The artificial intelligence algorithm is thus able to modify the predictive model used to assess the conformance of the material M for the purposes of processing, as a function of the information obtained with the detection means related to the material M itself and to the result obtained by processing the material M.

In this embodiment, too, the method may comprise interconnecting two or more processing machines 1 in such a way as to define an artificial neural network which comprises at least one processing unit configured to receive and store the plurality of parameters detected by a respective plurality of detection means 4 belonging to different processing machines 1, preferably located at different places and/or factories.

The processing unit is thus configured to operate on the predefined models of the individual processing machines 1 to vary the at least one reference parameter as a function of an analysis of the plurality of parameters detected.

In other words, the processing unit is configured to receive a large volume and variety of data and to analyse them by extrapolating existing links between parameters of a different nature and temporal variations of the same parameter, so as to improve the entire process of assessing whether or not the material M is suitable for processing.

In particular, the method comprises detecting a plurality of parameters and at least some of them are processed and used to assess the conformance of the material M using the processing unit to deploy the experience and information accumulated by different processing machines 1.

The processing machines 1 thus define the nodes of a neural network which shares the information so as to improve the collection of data which can be processed locally or centrally (by the processing unit) in order to optimise the network's learning process, allowing the predefined model to be progressively fine-tuned by taking into optimal account the statistical variations of the single parameters and their correlations.

It is also possible to determine and subsequently identify specific sets of parameters whose values, if taken individually, in certain contexts would not indicate specific situations calling for special attention but whose combination represents the need to adapt the production process so as to optimise it for that specific material M.

According to one advantageous aspect, the method may also involve comparing the at least one representative parameter with a predefined model, in order as to generate a respective percentage comparison value representing the degree of conformance of the at least one portion of material to be processed.

In other words, the percentage comparison value takes into account the degree to which the material deviates from an ideal, optimal condition and makes it possible to accurately assess the likelihood that processing that material will lead to the production of a defective product.

According to this aspect, the method also comprises modifying at least one operating parameter of the work unit 3 if the percentage comparison value is within a predetermined range and rejecting the material M if the percentage comparison value is outside said predetermined range.

Thus, a confidence interval is generated on the inside of which it is sufficient to modulate the operational specifications of the production process to be able to ensure that the material M is processed correctly, and on the outside of which a step of removing the material M from the production process is performed for preventive purpose to avoid making products that will very likely have to be rejected because they are made from a material M identified as being excessively defective.

In a preferred embodiment, the processing machine 1 comprises an accumulation buffer and the step of modifying at least one operating parameter of the work unit 3 is performed prior to the transfer of the material M to the accumulation buffer, so that the accumulation buffer can, if necessary, give the machine enough time for its operating parameters to be varied automatically and/or manually to adapt it to work under optimum conditions with the portion of material about to be transferred to it.

In other words, the processing machine 1 is provided with an accumulation buffer used for storing part of the material M before it is processed but after it has been inspected by the detection means 4.

That way, if a portion of the material M is found to have properties such as to necessitate adapting the production process specifications, it would be possible for an operator, or for suitable automatic removing means, to modify the operating parameters of the processing machine 1 without having to interrupt the processing operations being performed by the processing machine 1 because the work unit 3 will receive a certain portion of material M after a predetermined length of time depending on the size of the accumulation buffer and will therefore be made ready to process that portion of material M.

With reference to the accompanying drawings, to which this embodiment of the method also apply, a possible application of the method of this invention is shown in particular in Figures 1 and 2.

Figure 1 in particular shows a processing machine 1 designed to process rolls of continuous web.

This processing machine 1 comprises a feed station 2 provided with two coupling devices 2a configured to retain and move respective rolls of continuous web.

Specifically, the rolls are disposed in the vicinity of the feed station 2, moving them, for example, with a suitable carriage, from which they are then transferred automatically or manually to couple them to the respective coupling device 2a.

As may be observed in Figure 1, the step of detecting the representative parameters of the material M - the roll of web in the specific case illustrated - may be performed both upstream of the position where the material M is transferred to the feed station 2 and downstream of the feed station, through suitable detection means 4, illustrated in Figures 1 and 2, in the form of cameras disposed in such a way that their field of view C is centred on the material M.

As already mentioned, it is also possible for the detection means 4 to be movable and to orbit around the material M so as to allow inspecting its entire surface and/or to facilitate inspecting its full volume.

This detecting step is in any case performed upstream of the work unit 3 so that the integrity and quality level of the material M can be assessed before it is processed in order to promptly identify any atypical properties making it necessary to modify one or more of the operating parameters of the work unit 3 or to remove the material M.

As may be observed in particular in Figure 2, the detecting step may be performed either on the roll prior to unwinding (generally speaking, on all of the material M as a whole) or on a portion of the web while it is being unwound (generally speaking, on a succession of individual portions of the material M).

The method may also comprise a step of graphically displaying said at least one representative parameter by means of a graphical interface.

For example, this step may be performed by displaying a temporal trend graph for the at least one representative parameter, which must remain within a predetermined range of acceptability which may also be represented on the same graph as the aforesaid parameter.

That way, an operator can be provided with a clear indication of the properties detected and their values, so that even the operator is aware of the need to take action to modify at least one operating parameter of the work unit 3.

The method may also comprise a step of storing the at least one representative parameter for subsequent analysis.

It is thus possible to collect information over time to allow optimising decision-making algorithms and the predefined model which can be used to decide how to modify the operating conditions of the work unit 3 as a function of the different representative parameters which allow determining the conditions of the material M.

Preferably, the storing step is carried out by storing the at least one parameter in a remote storage unit, the remote storage unit preferably comprising a computing cloud.

Generally speaking, storage may be carried out by a physical storage unit installed at or on the processing machine 1 or by a virtual storage unit, such as a computing cloud is, configured to save and store the representative parameters so they can be analysed at a later stage.

It should be noted that if the processing unit comprises a computing cloud, even the processes used to analyse the representative parameters to determine whether or not the material M is suitable for processing may be performed remotely through the computing cloud.

Further, the method may also comprise generating an alert signal and sending it to a remote terminal if at least one representative parameter of the material M does not conform with a predetermined model.

That way, it is possible to generate a signal identifying the presence, at the feed station 2, of a material unsuitable for processing and to send that signal to a remote terminal such as, for example, a computer, a tablet, a smartphone or other electronic device, whether portable or not, whereby a user can be informed that an anomalous situation has arisen. Advantageously, the alert signal may also comprise information relating to the representative parameters detected and their specific conformance to the predefined model.

This aspect allows promptly providing the user with the information necessary to decide directly whether or not human intervention is required. Advantageously, this second embodiment, too, achieves the proposed aims and overcomes the above mentioned drawbacks of the prior art by providing the user with a method for improving the efficiency of a processing machine which ensures that the machine process is performed in the optimum manner and is efficiently adapted to the specific properties of the material M being processed, hence reducing the risk of making non-marketable products which would have to be rejected.

Still more advantageously, this embodiment, too, is applicable in the tobacco industry because the production of the automatic machines used in this industry is very strongly conditioned by the quality of the material used; use of less than good quality materials significantly reduces the productivity of these machines.

Nevertheless, this embodiment may also be applied outside the tobacco industry: for example, for the management of materials for automatic machines in general such as packing machines for confectionery, food products, absorbent articles and the like.

## Claims

1. A method for improving the efficiency of an automatic packaging machine (1) of consumer products, in particular of the tobacco industry, comprising the steps of:
- preparing at least one material (M), in particular a raw material, a semi-finished item or a finished article, at a respective feed station (2) of the machine (1); said machine comprising at least one work unit (3) designed to operate on said material (M);
- detecting, by means of detection means (4), at least one parameter representing the quality of at least one portion of the material (M) whilst the material (M) is at the feed station (2);
- if said at least one parameter detected is non-conforming with a predetermined model based on at least one reference parameter, removing at least a non-conforming part of said material (M) in such a way that said non-conforming part does not reach said work unit (3);
**characterized in that** the detecting step is carried out while the material (M) is arranged in a loading area located immediately in front of the feed station (2), where the loading area forms part of a work island (5) containing the automatic packaging machine (1), or is performed downstream of the loading of the material (M) in the feed station (2) and upstream of a processing actuated by said at least one work unit (3), namely at an instant in which the material (M), or at least a relative portion, which is an object of the detecting, has not yet been subjected to any processing.

2. The method according to claim 1, **characterised in that** it is operated by means of at least an artificial intelligence algorithm and/or an artificial neural network which is trained to recognise, in particular by a big data analysis, the defects of the material which, individually or in combination, can compromise the overall continuity of operation and the overall efficiency of the automatic packaging machine (1).

3. The method according to claim 1 or 2, comprising the steps of:
- detecting the presence of any non-conforming products feeding out of the work unit (3);
- determining a cause of non-conformance of said non-conforming products;
- modifying the at least one reference parameter as a function of said cause of non-conformance.

4. The method according to any one of the preceding claims, wherein the step of removing at least a non-conforming part of said material (M) is performed in such a way as to not require a stoppage of the automatic packaging machine (1) and/or in such a way that the non-conforming material (M) does not produce rejects in the production of the automatic packaging machine (1).

5. The method according to any one of the preceding claims, wherein the automatic packaging machine (1) comprises an accumulation buffer and the removing step is performed prior to the transfer of the material (M) to the accumulation buffer, so that the accumulation buffer can compensate for a stopping in the feeding of material (M), as a result of the material (M) being removed.

6. The method according to any one of the preceding claims, comprising a step of storing said at least one representative parameter to allow a subsequent analysis.

7. The method according to claim 6, wherein the storing step is actuated by storing the at least one parameter in a remote storage unit, preferably said remote storage unit comprising a computing cloud.

8. The method according to any one of the preceding claims, comprising the steps of generating an alert signal and sending said alert signal to a remote terminal if at least a parameter representing the material (M) does not conform to a predetermined standard, said remote terminal preferably comprising at least one between: a computer, a tablet, a smartphone.

9. The method according to any one of the preceding claims, wherein the at least one material (M) comprises a plurality of elements and wherein the detecting step is performed on a portion of each element, preferably said elements being identical to each other and positioned according to a configuration of mutual juxtaposition or superposition and preferably said detection being performed on an externally visible perimeter portion of said elements in the configuration of mutual juxtaposition or superposition.

10. The method according to any one of the preceding claims, wherein the detecting step is performed by moving the detection means (4) around the material (M), in such a way as to acquire at least one parameter representing the entire free surface of the material (M).

11. The method according to any one of the preceding claims, wherein the step of detecting at least one parameter is carried out by detecting at least one between: moisture content of the material (M), thickness of the material (M), presence of holes and/or openings, temperature of the material (M), presence of electrostatic charges, presence of fold lines, cuts, other surface and/or internal defects, colour of the material, presence of environmental marks or conditions.

12. The method according to any one of the preceding claims, wherein the automatic packaging machine (1) is a machine included in the following group: machine for making filters; machine for making cigarette segments; filter tip attachment machine; packaging machine - cellophane wrapping machine, cartoning machine - automatic machine in general.

13. The method according any one of the preceding claims, comprising the following steps:
- interconnecting a plurality of processing machines defining an artificial neural network comprising at least a processing unit configured to receive and store a plurality of parameters detected by respective detection means (4) of the plurality of processing machines (1);
said processing unit being further configured for modifying the at least one reference parameter of the processing machines (1) of the artificial neural network as a function of an analysis of said plurality of parameters.

## Patentansprüche

1. Verfahren zur Verbesserung der Effizienz einer automatischen Verpackungsmaschine (1) für Konsumgüter, insbesondere der tabakverarbeitenden Industrie, umfassend die folgenden Schritte:
- Vorbereiten von mindestens einem Material (M), insbesondere eines Rohmaterials, eines halb fertigen Artikels oder eines fertigen Artikels, an einer jeweiligen Zuführungsstation (2) der Maschine (1), wobei die Maschine mindestens eine Bearbeitungseinheit (3) umfasst, die ausgestaltet ist, um auf dem Material (M) zu arbeiten;
- Erkennen von mindestens einem Parameter, der die Qualität von mindestens einem Abschnitt des Materials (M) repräsentiert, mittels Erkennungsmitteln (4), während das Material (M) an der Zuführungsstation (2) zugeführt wird;
- wenn der mindestens eine erkannte Parameter nicht mit einem vorgegebenen Muster, basierend auf mindestens einem Referenzparameter, übereinstimmt, Entfernen von mindestens einem fehlerhaften Teil des Materials (M), sodass der fehlerhafte Teil die Bearbeitungseinheit (3) nicht erreicht,
**dadurch gekennzeichnet, dass** der Schritt zum Erkennen durchgeführt wird, während das Material (M) in einem Ladebereich angeordnet ist, der sich unmittelbar vor der Zuführungsstation (2) befindet, wobei die Ladebereiche einen Teil einer Bearbeitungsinsel (5) formen, enthaltend die automatische Verpackungsmaschine (1), oder nach dem Laden des Materials (M) in die Zuführungsstation (2) und vor einer Bearbeitung durchgeführt wird, die von der mindestens einen Bearbeitungseinheit (3) ausgeführt wird, d. h. in einem Augenblick, in dem das Material (M) oder zumindest ein relativer Abschnitt, der ein Gegenstand der Erkennung ist, noch keiner Bearbeitung unterzogen wurde.

2. Verfahren nach Anspruch 1, **dadurch gekennzeichnet, dass** es mithilfe von mindestens einem Algorithmus der künstlichen Intelligenz und/oder einem künstlichen neuronalen Netz betrieben wird, dem beigebracht wurde, insbesondere durch eine Big-Data-Analyse Fehler des Materials festzustellen, die einzeln oder in Kombination die Gesamtbetriebskontinuität und die Gesamteffizienz der automatischen Verpackungsmaschine (1) beeinträchtigen können.

3. Verfahren nach Anspruch 1 oder 2, umfassend die folgenden Schritte:
- Erkennen von fehlerhaften Produkten, die aus der Bearbeitungseinheit (3) ausgetragen werden;
- Ermitteln einer Fehlerursache dieser fehlerhaften Produkte;
- Modifizieren des mindestens einen Referenzparameters als eine Funktion der Fehlerursache.

4. Verfahren nach einem der vorhergehenden Ansprüche, wobei der Schritt zum Entfernen von mindestens einem fehlerhaften Teil des Materials (M) so durchgeführt wird, dass die automatische Verpackungsmaschine (1) nicht stillgesetzt werden muss, und/oder so, dass das fehlerhafte Material (M) keinen Ausschuss in der Produktion der automatischen Verpackungsmaschine (1) generiert.

5. Verfahren nach einem der vorhergehenden Ansprüche, wobei die automatische Verpackungsmaschine (1) einen Akkumulationsspeicher umfasst und der Schritt zum Entfernen vor der Übergabe des Materials (M) an den Akkumulationsspeicher durchgeführt wird, sodass der Akkumulationsspeicher eine Unterbrechung bei der Zuführung von Material (M) aufgrund des Entfernens des Materials (M) ausgleichen kann.

6. Verfahren nach einem der vorhergehenden Ansprüche, umfassend einen Schritt zum Speichern des mindestens einen repräsentativen Parameters, um eine nachfolgende Analyse zu erlauben.

7. Verfahren nach Anspruch 6, wobei der Schritt zum Speichern ausgeführt wird, indem der mindestens eine Parameter in einer Fernspeichereinheit gespeichert wird, wobei diese Fernspeichereinheit vorzugsweise eine Rechnerwolke umfasst.

8. Verfahren nach einem der vorhergehenden Ansprüche, umfassend die Schritte zum Generieren eines Warnsignals und zum Senden des Warnsignals an ein Fernendgerät, wenn mindestens ein das Material (M) repräsentierender Parameter nicht mit einem vorgegebenen Standard übereinstimmt, wobei das Fernendgerät vorzugsweise mindestens entweder einen Computer und/oder ein Tablet und/oder ein Smartphone umfasst.

9. Verfahren nach einem der vorhergehenden Ansprüche, wobei das mindestens eine Material (M) eine Vielzahl von Elementen umfasst, und wobei der Schritt zum Erkennen auf einem Abschnitt eines jeden Elements durchgeführt wird, wobei die Elemente vorzugsweise miteinander identisch und nach einer Auslegung einer gegenseitigen Nebeneinanderstellung oder Überlagerung positioniert sind und die Erkennung vorzugsweise auf einem extern sichtbaren umfangseitigen Abschnitt der Elemente in der Auslegung der gegenseitigen Nebeneinanderstellung oder Überlagerung durchgeführt wird.

10. Verfahren nach einem der vorhergehenden Ansprüche, wobei der Schritt zum Erkennen durchgeführt wird, indem die Erkennungsmittel (4) rund um das Material (M) bewegt werden, sodass mindestens ein Parameter erfasst wird, der die gesamte freie Oberfläche des Materials (M) repräsentiert.

11. Verfahren nach einem der vorhergehenden Ansprüche, wobei der Schritt zum Erkennen von mindestens einem Parameter ausgeführt wird, indem mindestens entweder der Feuchtigkeitsgehalt des Materials (M) und/oder die Dicke des Materials (M) und/oder Löcher und/oder Öffnungen und/oder die Temperatur des Materials (M) und/oder elektrostatische Ladungen und/oder Faltlinien und/oder Schnitte und/oder sonstige Oberfläche und/oder interne Fehler und/oder die Farbe des Materials und/oder Umgebungsspuren oder -bedingungen erkannt werden.

12. Verfahren nach einem der vorhergehenden Ansprüche, wobei die automatische Verpackungsmaschine (1) eine Maschine ist, die zur folgenden Gruppe gehört: Maschine zur Herstellung von Filtern; Maschine zur Herstellung von Zigarettensegmenten; Maschine zur Anbringung von Filterspitzen; Verpackungsmaschine - Zellophaneinwickelmaschine, Kartoniermaschine - automatische Maschine im Allgemeinen.

13. Verfahren nach einem der vorhergehenden Ansprüche, umfassend die folgenden Schritte:
- Vernetzen einer Vielzahl von Bearbeitungsmaschinen, definierend ein künstliches neuronales Netz, umfassend mindestens eine Bearbeitungseinheit, die ausgelegt ist, um eine Vielzahl von Parametern zu empfangen und zu speichern, die von jeweiligen Erkennungsmitteln (4) der Vielzahl von Bearbeitungsmaschinen (1) erkannt wurden, wobei die Bearbeitungseinheit zudem ausgelegt ist, um den mindestens einen Referenzparameter der Bearbeitungsmaschinen (1) des künstlichen neuronalen Netzes als eine Funktion einer Analyse der Vielzahl von Parametern zu ändern.

## Revendications

1. Méthode pour améliorer l'efficacité d'une machine d'emballage automatique (1) de produits de consommation, en particulier de l'industrie du tabac, comprenant les étapes de :
- préparer au moins un matériau (M), en particulier une matière première, un article semi-fini ou un article fini, à un poste d'alimentation (2) respectif de la machine (1) ; ladite machine comprenant au moins une unité de travail (3) conçue pour opérer sur ledit matériau (M) ;
- détecter, au moyen de moyens de détection (4), au moins un paramètre représentant la qualité d'au moins une partie du matériau (M) pendant que le matériau (M) se trouve au poste d'alimentation (2) ;
- si ledit au moins un paramètre détecté est non conforme à un modèle prédéterminé basé sur au moins un paramètre de référence, retirer au moins une partie non conforme dudit matériau (M) de telle manière que ladite partie non conforme n'atteigne pas ladite unité de travail (3) ; **caractérisée en ce que** l'étape de détection est effectuée pendant que le matériau (M) est disposé dans une zone de chargement située immédiatement en face du poste d'alimentation (2), où la zone de chargement fait partie d'un îlot de travail (5) contenant la machine d'emballage automatique (1), ou est effectuée en aval du chargement du matériau (M) dans le poste d'alimentation (2) et en amont d'un traitement actionné par ladite au moins une unité de travail (3), à savoir à un instant où le matériau (M), ou au moins une partie relative, qui est un objet de la détection, n'a pas encore été soumis à un quelconque traitement.

2. Méthode selon la revendication 1, **caractérisée en ce qu'**elle est mise en œuvre au moyen d'au moins un algorithme d'intelligence artificielle et/ou un réseau neuronal artificiel qui est entraîné à reconnaître, notamment par une analyse des mégadonnées, les défauts du matériau qui, individuellement ou en combinaison, peuvent compromettre la continuité globale du fonctionnement et l'efficacité globale de la machine d'emballage automatique (1).

3. Méthode selon la revendication 1 ou 2, comprenant les étapes de :
- détecter la présence de tout produit non conforme sortant de l'unité de travail (3) ;
- déterminer une cause de non-conformité desdits produits non-conformes ;
- modifier l'au moins un paramètre de référence en fonction de ladite cause de non-conformité.

4. Méthode selon l'une quelconque des revendications précédentes, dans laquelle l'étape consistant à éliminer au moins une partie non conforme dudit matériau (M) est réalisée de manière à ne pas nécessiter un arrêt de la machine d'emballage automatique (1) et/ou de manière à ce que le matériau non conforme (M) ne produise pas de rebuts dans la production de la machine d'emballage automatique (1).

5. Méthode selon l'une quelconque des revendications précédentes, dans laquelle la machine d'emballage automatique (1) comprend un stock tampon et l'étape de retrait est réalisée avant le transfert du matériau (M) vers le stock tampon, de sorte que le stock tampon puisse compenser un arrêt de l'alimentation en matériau (M), suite au retrait du matériau (M).

6. Méthode selon l'une quelconque des revendications précédentes, comprenant une étape de stockage dudit au moins un paramètre représentatif pour permettre une analyse ultérieure.

7. Méthode selon la revendication 6, dans laquelle l'étape de stockage est actionnée par le stockage dudit au moins un paramètre dans une unité de stockage à distance, de préférence ladite unité de stockage à distance comprenant une informatique en nuage.

8. Méthode selon l'une quelconque des revendications précédentes, comprenant les étapes consistant à générer un signal d'alerte et à envoyer ledit signal d'alerte à un terminal à distance si au moins un paramètre représentatif du matériau (M) n'est pas conforme à une norme prédéterminée, ledit terminal à distance comprenant de préférence au moins un élément entre : un ordinateur, une tablette, un Smartphone.

9. Méthode selon l'une quelconque des revendications précédentes, dans laquelle l'au moins un matériau (M) comprend une pluralité d'éléments et dans laquelle l'étape de détection est réalisée sur une portion de chaque élément, de préférence lesdits éléments étant identiques les uns aux autres et positionnés selon une configuration de juxtaposition ou de superposition mutuelle et de préférence ladite détection étant réalisée sur une portion de périmètre visible extérieurement desdits éléments dans la configuration de juxtaposition ou de superposition mutuelle.

10. Méthode selon l'une quelconque des revendications précédentes, dans laquelle l'étape de détection est réalisée en déplaçant les moyens de détection (4) autour du matériau (M), de manière à acquérir au moins un paramètre représentant toute la surface libre du matériau (M).

11. Méthode selon l'une quelconque des revendications précédentes, dans laquelle l'étape consistant à détecter au moins un paramètre est réalisée en détectant au moins un paramètre entre : la teneur en humidité du matériau (M), l'épaisseur du matériau (M), la présence de trous et/ou d'ouvertures, la température du matériau (M), la présence de charges électrostatiques, la présence de lignes de pliage, de coupures, d'autres défauts de surface et/ou internes, la couleur du matériau, la présence de marques ou de conditions environnementales.

12. Méthode selon l'une quelconque des revendications précédentes, dans laquelle la machine d'emballage automatique (1) est une machine incluse dans le groupe suivant : machine de fabrication de filtres ; machine de fabrication de segments de cigarettes ; machine de fixation d'embouts de filtres ; machine d'emballage - machine d'enveloppement avec cellophane, machine à cartonner - machine automatique en général.

13. Méthode selon l'une quelconque des revendications précédentes, comprenant les étapes suivantes :
- interconnecter une pluralité de machines de traitement définissant un réseau neuronal artificiel comprenant au moins une unité de traitement configurée pour recevoir et stocker une pluralité de paramètres détectés par des moyens de détection (4) respectifs de la pluralité de machines de traitement (1) ;
ladite unité de traitement étant de plus configurée pour modifier l'au moins un paramètre de référence des machines de traitement (1) du réseau neuronal artificiel en fonction d'une analyse de ladite pluralité de paramètres.
